# EUROPEAN PATENT APPLICATION

(11) **EP 4 588 844 A1**
(43) Date of publication of application: **23.07.2025**
(21) Application number: 24153052.6
(22) Date of filing: 22.01.2024
(51) Int. Cl.: B65G 1/04

(54) **A PORT**

(71) Applicant: AUTOSTORE TECHNOLOGY AS, 5578 Nedre Vats (NO)
(72) Inventor: MYRBAKKEN, Joakim A, 5578 Nedre Vats (NO); GJERDEVIK, Øystein, 5578 Nedre Vats (NO)
(74) Representative: Kilburn & Strode LLP

(57) **Abstract**

The disclosure relates to a port configured for coupling to a storage grid, an automated container storage and retrieval system, a method for operating a port coupled to a storage grid and a computer-readable medium. The port comprises an opening, a conveyor and a cover. The opening is configured to enable retrieval of goods therethrough from a container. The conveyor is configured to move the container between the storage grid and the opening. The cover is configured to move between a first location covering the opening and a second location within the storage grid.

## Description

### TECHNICAL FIELD

The disclosure relates to a port. More particularly, it relates to a port configured for coupling to a storage grid, an automated container storage and retrieval system, a method for operating a port coupled to a storage grid and a computer-readable medium.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

At a port, a movement mechanism may move the containers between the grid and a location providing access to the containers. Containers may be sequentially transported to this location in order for their respective goods to be accessed in turn. Alternatively, or in addition, goods may be put into one or more of the containers at this location for storing in the grid. A port therefore provides an interface between the interior of the grid where containers are stored and the exterior of the grid where containers are accessed.

Known ports can lead to safety issues. Since the port provides access to locations where containers, robots (or parts thereof) and other equipment is moving, in an automated manner, it is possible for an operator at the port to come into contact with these components at the port. For example, a human operator may have a limb squeezed between the container and a structure of the port as the container moves towards the operator. In another example, the operator may access via the port an area where a robot is moving the containers, which may also risk injury. Therefore, a problem with known ports is that they may be less safe than would be desirable.

Known ports may increase the distance between the location at which access to the containers is provided and the storage grid. However, a problem with such arrangements is that this leads to additional space being taken up within the storage facility. This may be of particular significance in the context of storage solutions, for which it is generally desirable to maximise the quantity or volume of goods which can be stored in a given space. In other words, such known ports are less space-efficient than would be desirable.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows an embodiment of a port as described herein;
Fig. 6A shows an embodiment of the port coupled to a port column of a storage grid as described herein;
Fig. 6B shows another view of the embodiment of Fig. 6A in which a cover of the port has moved;
Fig. 6C shows a further view of the embodiment of Fig. 6A and Fig. 6B in which a cover of the port has further moved;
Fig. 7 shows an embodiment of a cover as described herein;
Fig. 8 shows an embodiment of the port as described herein;
Fig. 9 shows an embodiment of a grid cell as described herein;
Fig. 10 shows an embodiment of the grid cell and cover as described herein;
Fig. 11 shows an embodiment of a grid cell structure configured for coupling to a multi-opening port as described herein;
Fig. 12 shows an embodiment of a method for operating a port coupled to a storage grid as described herein.

### DETAILED DESCRIPTION

In overview the disclosure relates to a port configured for coupling to a storage grid. The port includes an opening, a conveyor and a cover. The opening is configured to enable retrieval of goods therethrough from a container. In other words, the opening is configured to provide access to a container, the container contains, stores or holds goods, and the goods can be accessed and retrieved from the container through the opening. A (human or robot) operator may retrieve the goods from the container via the opening. The goods may comprise one or more objects, i.e. one or more products, items or supplies.

The conveyor is configured to move the container between the storage grid and the opening. In other words, the conveyor may be configured to move one or more containers from the storage grid to the opening and/or to move one or more containers from the opening to the storage grid.

The cover is configured to move between a first location covering the opening and a second location within the storage grid. In other words, the cover may be configured to move from the first location to the second location and/or from the second location to the first location. When the cover is in the first location, it may not be possible to access the opening, i.e. it may not be possible to access the interior of the port or the interior of the container. When the cover is in the second location, it may be possible to access the opening, i.e. to retrieve goods from the container through the opening, but it may not be possible to access the storage grid, i.e. to come into contact with any mechanisms moving containers within the storage grid or between the storage grid and the port/opening.

The features described above interact to enable an increase to the safety of a port for coupling to a storage grid. Since the cover in the first location covers the opening, the operator is prevented from coming into contact with containers moving towards/away from the opening and therefore the risk of trapping or squeezing body parts or pieces of equipment/machine between the containers and structures of the port are reduced. Since the cover can be moved into the storage grid, in its second location it can block access by the operator to the interior of the storage grid and any movement mechanisms operating there, for example mechanisms moving containers towards or away from the port/opening. In other words, the cover can increase the safety of the port for the operator in both of its first and second locations. The cover can prevent the operator coming into contact with moving components of the port/storage grid in both of its first and second locations.

Moreover, the features described above interact to enable a more space-efficient port to be provided. Since the cover in its second location blocks access by an operator to the storage grid when the opening is accessible, the opening can be located close to the storage grid without increasing the risk to the operator. The cover can satisfy a useful safety function in both these locations with a low footprint. In addition, since the cover is moveable into the storage grid, there is no need to provide additional space around the opening for the cover to move into when the opening is accessed. For example, since the cover does not move sideways to provide access to the opening, this enables installation of ports with multiple openings directly adjacent to each other, which may make more effective use of the available space at the periphery of the grid.

### Automated storage and retrieval system overview

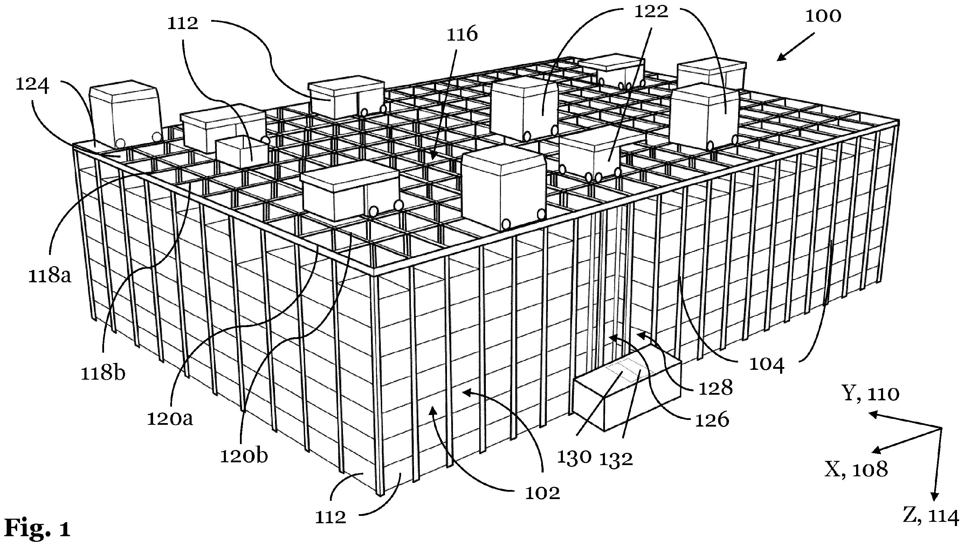

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

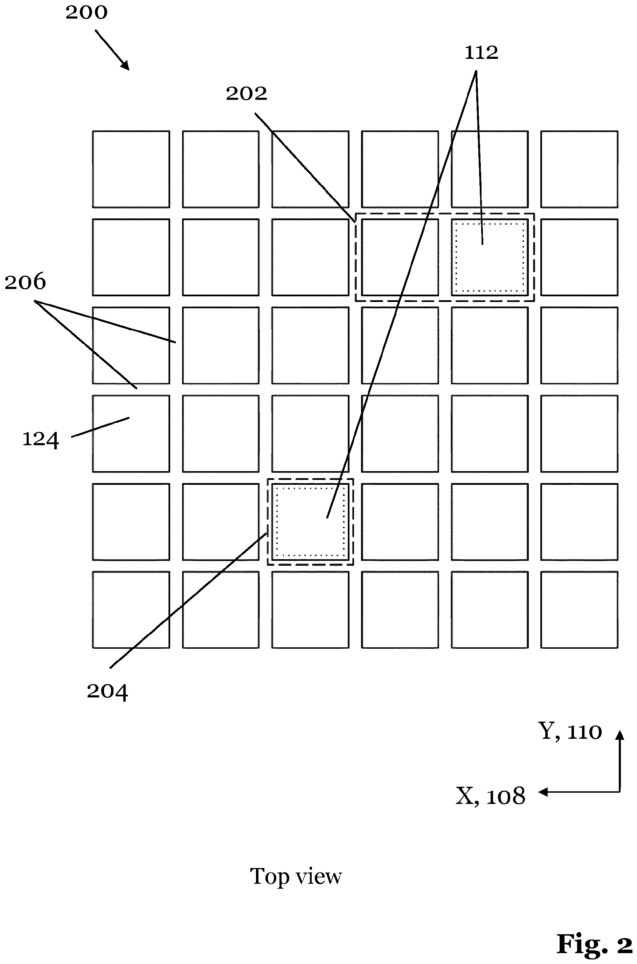

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

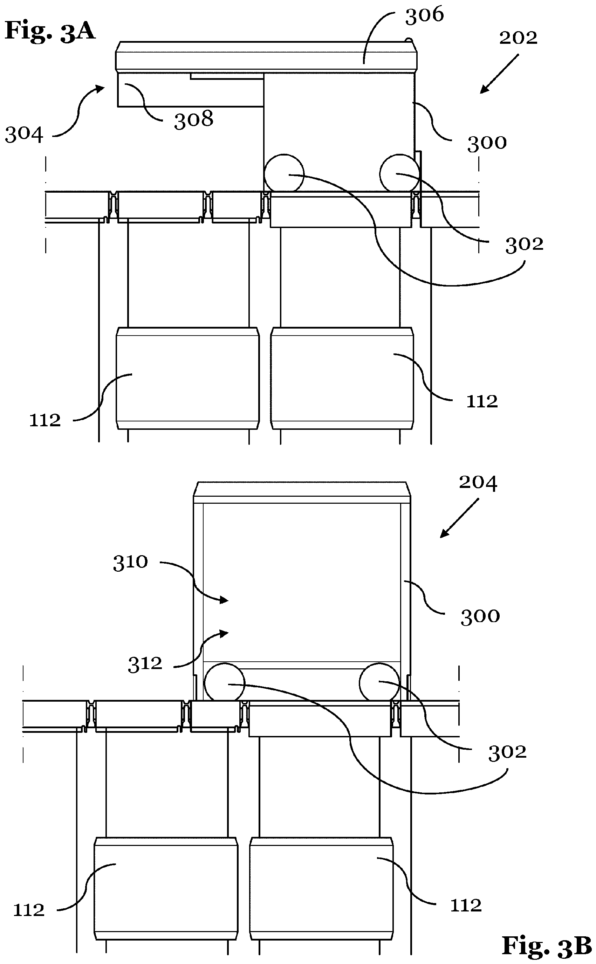

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

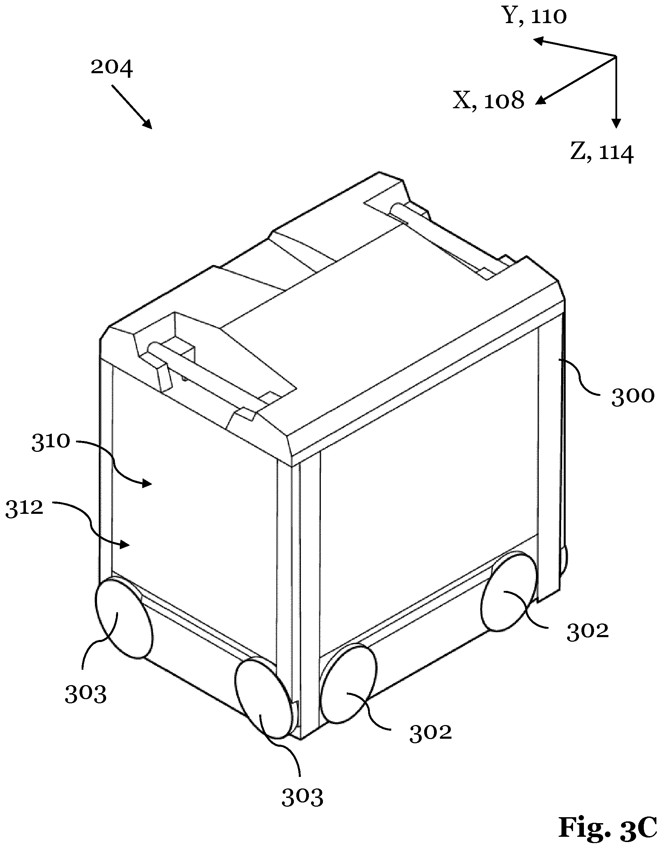

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

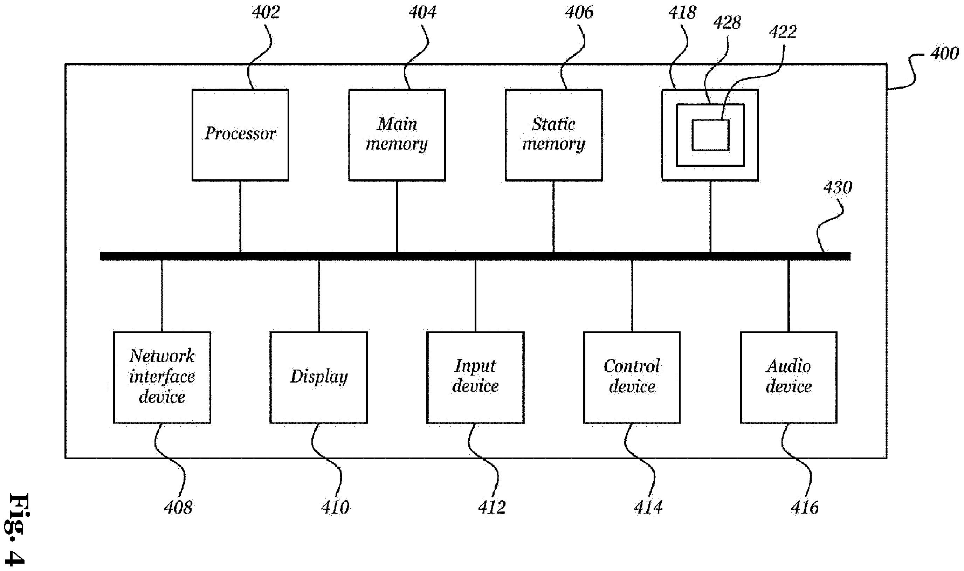

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

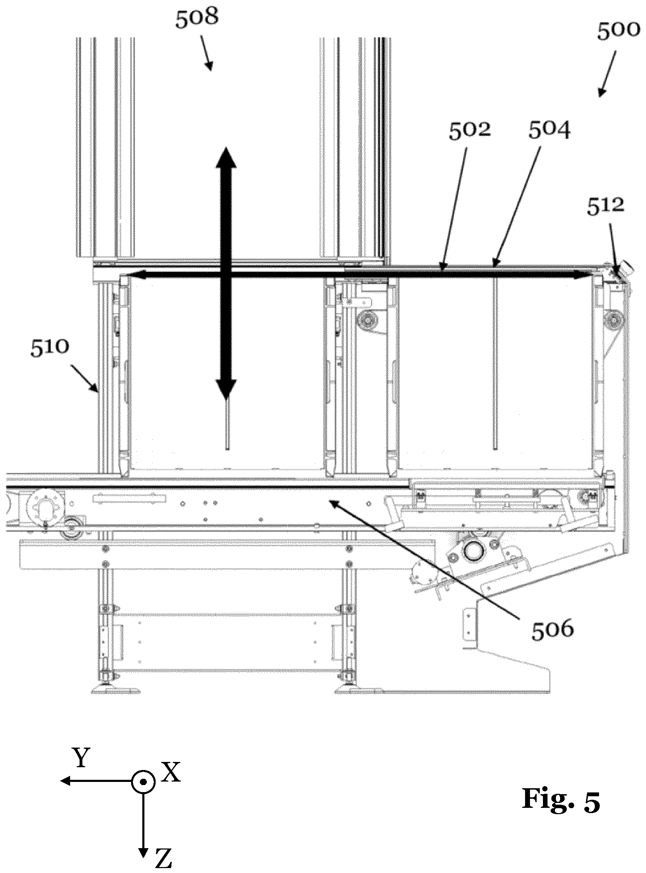

Referring to the embodiment shown in Fig. 5, a port 500 is depicted coupled to a port column 508 of the storage grid. The port 500 may correspond to one of ports 130, 132 referred to in relation to Fig. 1. The port column 508 may correspond to one of port columns 126, 128 referred to in relation to Fig. 1. Fig. 5 also depicts a vertical frame member 510, which may correspond to vertical frame member 104 referred to in relation to Figure 1. In other words, the port 500 as depicted in Fig. 5 may be coupled to the grid 100 referred to in relation to Fig. 1 (referred to interchangeably as a storage grid 100 herein). The port 500 is configured for coupling to the storage grid 100.

As used herein, the port 500 may be described as a work station, an access station, a container handling station or a picking station. The port 500 comprises a body, which may also be described as a frame or a housing. The body may comprise a three-dimensional structure comprising one or more solid panels separating an interior of the port 500 from an exterior of the port 500. The body may prevent access to the interior of the port 500 (except through the opening when appropriate) and may therefore also enable safe operating of the port 500 by the operator.

The port 500 comprises an opening 502. The opening is configured to enable retrieval of goods therethrough from a container. In other words, the opening may be configured such that goods can be retrieved from a container through the opening 502. An operator standing in front of the port 500 (to the right of Fig. 5) may retrieve goods from a container through the opening. The opening 502 may be an open or unobstructed space (at least when it is not covered, as described below) enabling goods to pass therethrough. The opening 502 may comprise a rectangular opening. The opening 502 may be located at an upper surface of the port 500. The opening 502 may be defined in a horizontal plane at a constant height, e.g. at a constant height from the floor of a storage facility where the port 500 is housed.

The port 500 comprises a cover 504. As depicted in Fig. 5, the cover blocks, obstructs or covers the opening 502, and is therefore depicted as being located directly vertically above the opening 502. The cover 504 may comprise a horizontal plane made of a solid material. The cover 504 may comprise a transparent material such as glass or transparent plastic such as PMMA to enable the interior of a container to be viewed therethrough. The cover 504 is configured to move between a first location covering the opening 502 and a second location within the storage grid 100. As depicted in Fig. 5, the cover 504 is disposed in the first location such that an operator cannot access goods in a container located below the opening 502. Fig. 5 depicts a horizontal arrow close to the cover 504 indicating that the cover 504 can be moved between the first location and the second location. This may comprise translating the cover 504 horizontally (in the Y-direction). As used herein, the cover 504 may be referred to as a hatch, a shutter or a safety glass.

When the cover 504 is moved to its second location, it may be possible to retrieve goods from a container through the opening 502, since the cover does not obstruct, block or cover the opening 502. When the cover is in its second location, it covers the port column 508, or at least the parts of the port column 508 above the height of the cover 504/port 500.

As used herein, references to the cover 504 comprising a horizontal plane maybe used to indicate that the plane is approximately horizontal. As used herein, references to the cover 504 being translated horizontally may be used to refer to the cover being translated approximately horizontally. In some examples, the cover may be a plane oriented at an acute angle to horizontal and may be configured to be translated in a direction along this acute angle to horizontal. This acute angle may be approximately 5°, approximately 10°, approximately 15°, approximately 20°, approximately 25° or approximately 30°. The acute angle may be oriented such that the cover 504 is higher closer to the grid 100, i.e. such that parts of the cover 504 closer to the grid 100 are at a greater vertical height than parts of the cover 504 further from the grid 100 and such that the cover 504 is at a greater (average) vertical height in the second location than in the first location. This arrangement of the cover 504 may be suitable for providing improved safety of the operator as described herein while not obstructing efficient retrieval of goods from the container.

The port 500 may comprise one or more belts coupled to one or more respective motors, the one or more belts coupling the respective motors to the cover 504. The one or more motors may be driven to move (rotate) the respective one or more belts to cause the cover 504 to move between the first and second locations. Alternatively, or in addition, the movement of the cover 504 between the first and second locations may be performed manually, for example via one or more handles on the cover 504 suitable for use by an operator to push/pull the cover 504.

The port 500 comprises a conveyor 506. The conveyor is configured to move one or more containers between the storage grid 100 and the opening 502. In other words, the conveyor 506 may be configured to move one or more containers between the port column 508 and the opening 502. The conveyor 506 may be described as a conveyor belt. The conveyor 506 may comprise a belt wrapped around two or more drums. One or more of the drums may be driven to rotate, for example by an (electric) motor. The drum(s) may be coupled to the belt through friction and optionally through one or more interlocking features to cause the belt to rotate around the drums. A container placed on the belt of the conveyor 506 may thus be moved in the Y-direction (towards or away from the opening 502) depending on whether the drum(s) is/are driven to rotate in a clockwise or anti-clockwise direction.

The conveyor 506 maybe described as being comprised in the port 500. When the port 500 is coupled to the storage grid 100, at least part of the conveyor 506 may also be disposed in, located in or comprised in the storage grid 100, for example in the port column 508 of the storage grid 100. A container may be lowered by a robot down (in the Z-direction) the port column 508. When the container reaches the conveyor 506, the conveyor 506 may be used to translate the container to the opening 502 for retrieval of goods therefrom. Conversely, when goods are placed into the container at the opening 502, the conveyor 506 may be used to translate the container to the port column 508. A robot may then lift the container to be stored in the storage grid 100 (as depicted with the vertical arrow in the port column 508 in Fig. 5). The bottom of the port column 508 (i.e. the part of the port column 508 below the vertical height of the cover 504, may be referred to as a put/get cell.

In some embodiments, the conveyor 506 may extend further into the storage grid 100 (to the left of the port column 508 as depicted in Fig. 5. This may provide additional space for maneuvering multiple containers. For example, the conveyor 506 may move a first container from the opening 502 to this additional space. This may clear the space for a second container to be lowered down the port column 506 to rest on the conveyor 506. Movement of the top of the conveyor in the rightward direction as depicted in Fig. 5 may then position the first container in the port column 506 for lifting by a robot for storage in the storage grid 100. The same movement may position the second container below the opening 502 for retrieval of goods therefrom.

The port 500 may also comprise one or more additional conveyors and/or a longer or more complex system of conveyors in order to provide more flexibility for accommodating more containers within the port 500 and/or to increase the throughput of the port 500.

The first container may need to be lifted by the robot out of the put/get cell before the cover 504 is moved to its second location to enable retrieval of goods from the second container though the opening 502. This is because the cover 504 in its second location would otherwise block the path of the first container and therefore prevent it from being lifted. As such, the time required for exchanging containers may be increased somewhat due to the implementation of the cover 504 and the movement thereof. There is a prejudice against this in storage systems such that the techniques of the present disclosure would not readily be considered based on storage systems focusing on speed of transporting/exchanging/accessing containers. However, it has been determined that the techniques of the present disclosure provide an appropriate trade-off between speed of container exchange and safety. For example, increased safety corresponds to increased reliability of operations, prevention of interruption of operations, and increased automation of interaction of operators with the port 500, which can themselves indirectly increase the overall speed of operations to offset any loss thereof due to slower container exchange.

When the cover 504 is in its second location, from the position of the operator it may obstruct, block or cover one or more mechanisms used to move containers in the storage grid 100, for example one or more mechanisms used to raise or lower containers in the port column 508. As such, though the opening 502 is unobstructed for the second location of the cover 504 such that an operator may access a container, they may prevented from reaching through the port 500 to access the interior of the storage grid 100.

The top of each of the containers may be open and may be approximately the same size as the opening 502. As depicted in Fig. 5, the Y-direction size of the opening 502 may be approximately the same as the Y-direction size of the cover 504, may be approximately the same as the Y-direction extent of the port extending beyond the storage grid 100, and may be approximately the same Y-direction size as the port column 508. The X-direction size of the opening 502 may be approximately the same as the X-direction size of the cover 504, may be approximately the same as the X-direction extent of the port which is outside the storage grid 100, and may be approximately the same X-direction size as the port column 508. In other words, the size of the opening 502, the cover 504, the port column 508 and the external footprint of the port 500 may correspond or be approximately the same (in a horizontal, X-Y plane). This enables the cover 504 to be suitable for blocking the opening 502 and suitable for moving into the storage grid 100 to block the port column 508, while enabling this to be provided in the most space-efficient manner.

The port 500 may comprise a controller 512. The controller 512 may be configured to control movement of the conveyor 506 and/or may be configured to control movement of the cover 504. The controller may comprise a computer readable medium storing instructions for implementing the movement of the conveyor 506 and/or or of the cover 504. For example, the controller 512 may comprise instructions for generating and/or transmitting computer-executable instructions to one or more motors to effect these movements. In some examples, the port 500 may comprise separate controllers for movement of the conveyor 506 and the cover 504 respectively.

The mechanism for moving the cover 504 may be independent from the mechanism for moving the conveyor 506. In other words, the port 500 may comprise a first movement mechanism for moving the cover 504 and a second movement mechanism for moving the conveyor 506, as opposed to one drive mechanism causing movement of both the cover 504 and the conveyor 506. Moreover, the cover 504 may be prevented from moving if the conveyor 506 is moving, which may further increase the safety of the port 500. In sequence, the conveyor 506 may be moved to position a container below the opening 502, the conveyor 506 may stop, the cover 504 may be moved from the first location to the second location, goods may be retrieved, the cover 504 may be moved from the second to the first location, and the conveyor 506 may be moved to position the container in the port column 508.

The port 500 may comprise a locking mechanism for preventing the cover 504 from moving when the conveyor 506 is moving. The locking mechanism may comprise a physical/hardware/mechanical locking mechanism. For example, one or more protruding features on the cover 504 may contact one or more opposing features on the conveyor 506 when it is moving so as to prevent simultaneous movement of the cover 504. In some examples, the controller may be configured to transmit a control signal to an actuator of the port 500 communicatively coupled to the controller to cause it to extend to contact one or more protruding features on the cover 504 to prevent its movement when the conveyor 506 is moving, and to retract to enable its movement when the conveyor 506 is not moving. Alternatively, or in addition, the locking mechanism may comprise a software locking mechanism implemented in the controller 512. For example, the controller 512 may comprise logic, which may be implemented for example using an XOR logic gate, which prevents both the cover 504 and the conveyor 506 from being driven to move at the same time.

### Movement of the cover between the first and second locations

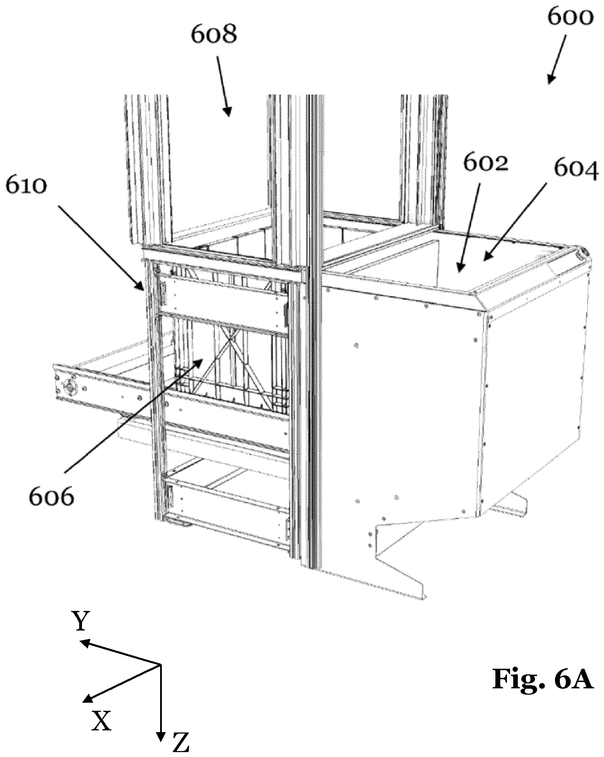

Referring to the embodiment shown in Figs. 6A-6C, a port 600 is depicted coupled to a port column 608 of the storage grid. The port 600 may correspond to the port 600 referred to in relation to Fig. 5. The port column 608 may correspond to the port column 508 referred to in relation to Fig. 5. The opening 602, cover 604 and vertical frame member 610 depicted in Figs. 6A-6C may correspond respectively to the opening 502, the cover 504 and the vertical frame member 510 referred to in relation to Fig. 5. Figs. 6A-C also depicts a container 606, which may be used to store goods for retrieval via the opening 602 and which may be transported to/away from the opening 602 using the conveyor as described herein.

In Fig. 6A, the cover 604 is in the first location in which it covers the opening 602. The cover 604 overlaps the opening 602 and is disposed slightly above the opening 602. The X-Y dimensions and locations of the opening 602 and the cover 604 may be the same or approximately the same in Fig. 6A. With the cover 604 in this first location, an operator cannot access the interior of the port 600, i.e. cannot retrieve goods from a container through the opening 602.

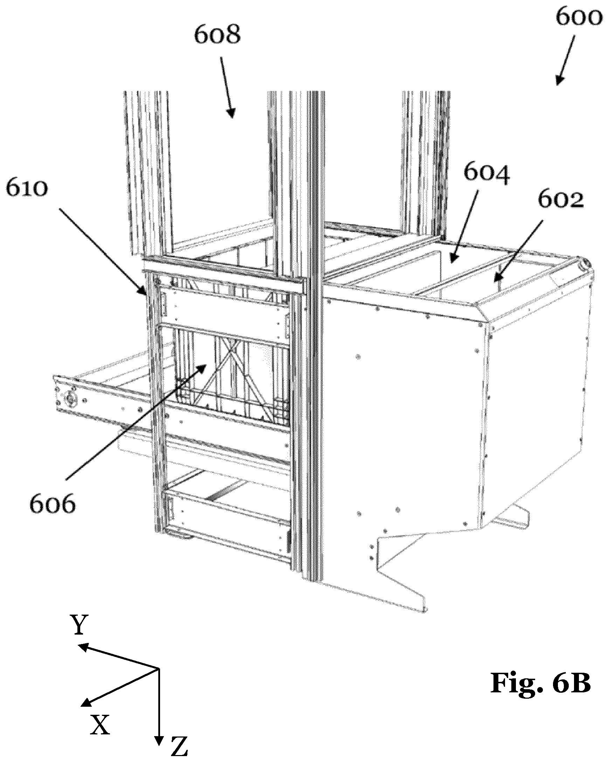

In Fig. 6B, the cover 604 has moved relative to its location in Fig. 6A. In Fig. 6B, the cover is between the first and second locations and the opening 602 is partially uncovered.

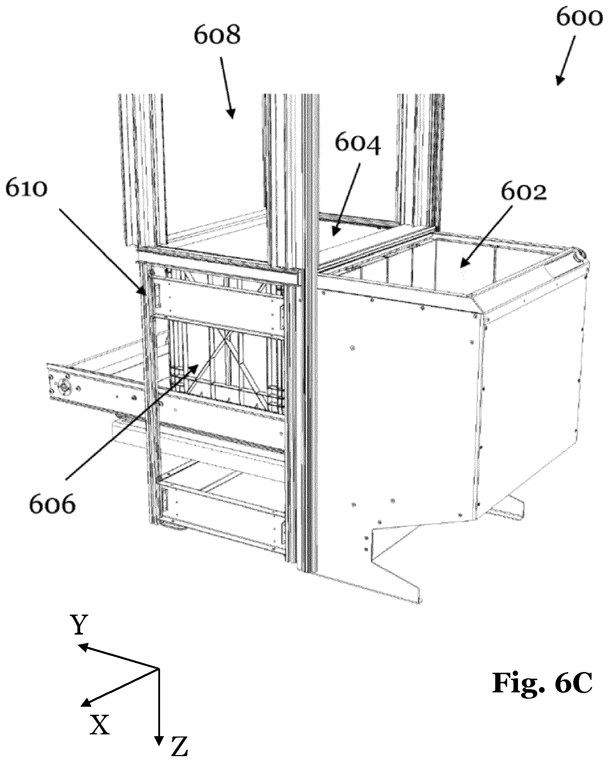

In Fig. 6C, the cover 604 has continued its movement relative to its location in Fig. 6A. In Fig. 6c, the cover 604 is in the second location in which it is within the storage grid. The opening 602 is uncovered such that an operator is able to retrieve goods from a container through the opening 602. The cover 604 overlaps a most proximal cell of the storage grid, i.e. the (`put/get') cell at the bottom of the port column 608. An operator is prevented by the cover 604 in the second location from reaching through the port 600 or otherwise accessing parts of the storage grid above this bottom cell, in which there may be moving containers and movement mechanisms implementing these movements, such as belts/pulleys.

### Further description of the cover

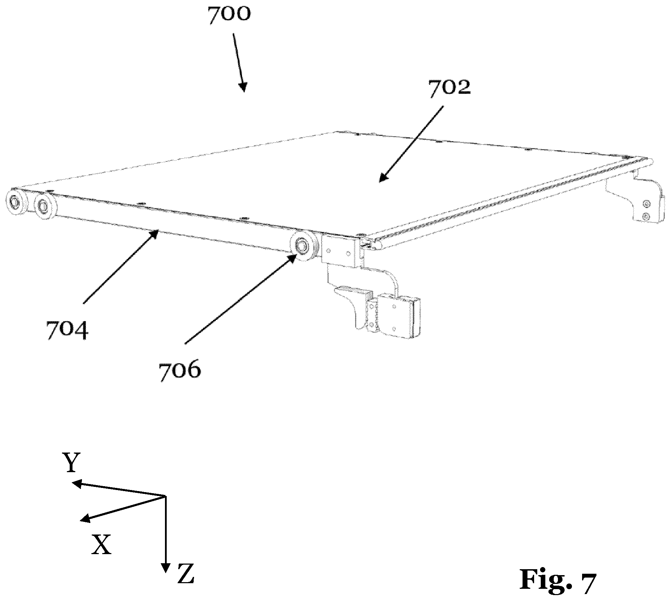

Referring to the embodiment shown in Fig. 7, the cover 700 (corresponding to the covers 504, 604 discussed above) is shown in more detail. The cover 700 may be generally shaped and arranged to comprise a flat plane or surface, which may extend in horizontal X-Y directions and have a thin profile in the Z-direction. When implemented in the port, all positions on this flat plane or surface may be at an approximately constant height (i.e. in the Z-direction).

The cover 700 may comprise a main body 702 shaped and arranged to comprise a flat plane or surface extending in horizontal X-Y directions, with a thin profile in the Z-direction, as described above. The main body 702 may be formed of a solid material, or may be gridded, so as to prevent an operator on one side of the main body 702 from accessing objects or components on the other side of the main body 702. The main body 702 may be formed of a transparent material such as glass or PMMA.

The cover 700 may comprise a frame 704. The frame 704 may hold/support the main body 702 and may comprise one or more features for coupling with the port and/or with the storage grid and/or with a drive mechanism for moving the cover 700.

The cover 700 may comprise one or more rollers 706. The cover 700 may comprise one or more rollers on each of two opposite sides of the cover 700, these opposite sides separated in the X-direction. The cover 700 may comprise multiple rollers 706 on each of these sides. On each of these sides, the cover 700 may comprise at least two rollers which are separated from each other in the Y-direction. Each of the rollers 706 may be fixed to the frame 704 at a central point of the roller and may comprise a wheel or drum which is free to rotate about this central fixing point. A bottom surface of the wheel or drum of each roller 706 may be configured to contact a part of the port and/or a part of the storage grid. As the cover 700 moves between the first location and the second location, the wheel or drum of each roller 706 may be configured to rotate relative to the part of the port and/or the part of the storage grid. This may reduce friction associated with this movement, and thereby may lower the power needed to implement this motion and increase the stability and reliability of the movement.

### Further description of the port

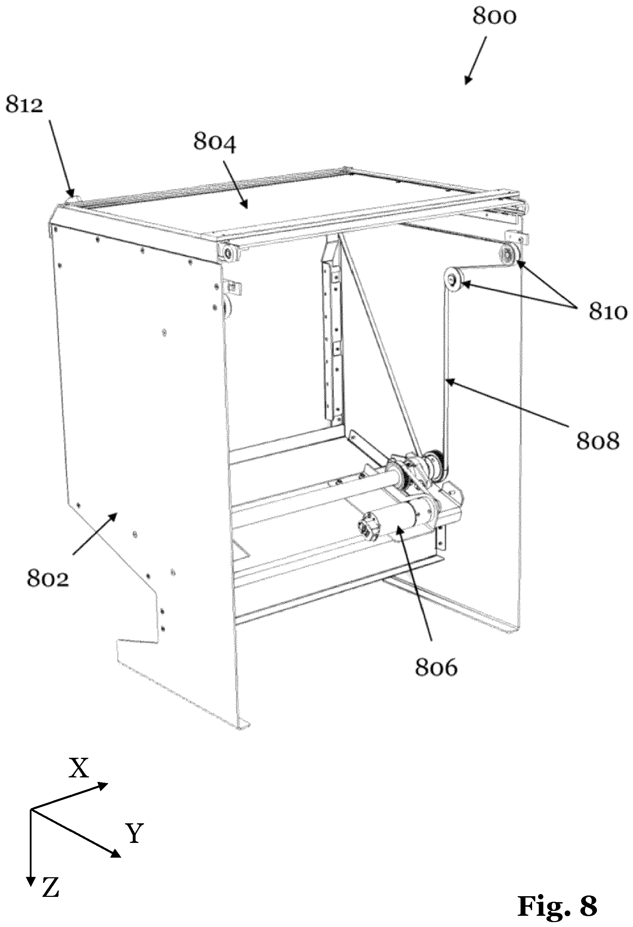

Referring to the embodiment shown in Fig. 8, the port 800 (corresponding to the ports 130, 132, 500, 600 discussed above) is shown in more detail. The port 800 may comprise a frame 802, which may provide structure and support for the other components of the port 800. The port 800 comprises the cover 804 (corresponding to the covers 504, 604, 700 described above).

The port 800 may comprise a drive mechanism configured to move the cover 804 between the first location and the second locations. The drive mechanism may comprise a motor 806, which may be an electric motor. The drive mechanism may comprise one or more belts 808 which couple the motor 806 to the cover 804 to implement movement of the cover 804. The drive mechanism 808 may comprise one or more wheels or drums 810 for supporting and directing the one or more belts 808 relative to the cover 804 and the motor 806. As the skilled person would understand, this arrangement is described by way of non-limiting example and there are various mechanical arrangements that could be used to move the cover 804 within the present disclosure.

The port 802 may comprise a controller 812 (which may correspond to the controller 512 described above). The controller may be communicatively coupled to the motor 806 or other drive mechanism for moving the cover 804. The controller maybe configured to generate a control signal and/or transmit this control signal to the motor 806/other drive mechanism. The control signal may be configured to cause movement of the cover 804. In some examples, the controller 812 may comprise one or more input devices such as buttons, keypads or touchscreens for an operator to control movement of the cover 804 and/or the conveyor. Alternatively, or in addition, the controller 812 may control movement of the cover 804 and/or the conveyor without direct operator input, for example based on sensing (using one or more sensors) that a container is located below the opening of the port 800 and/or that the conveyor of the port 800 is not currently moving.

Locating the drive mechanism and/or the controller 812 in the port 800, rather than in the storage grid 100 or in another component, may enable faster and simpler installation of the port 800 and integration of the port 800 with the storage grid. The port 800 may be coupled to the storage grid by sliding the conveyor of the port 800 into the storage grid 100, i.e. into the port column thereof. The frame 802 may be fixed to the storage grid, for example to the vertical frame members 104, 510, 610. This fixing maybe performed, for example, using screws and/or nuts and bolts. The height of the port 800 may be adjusted if needed such that the height of the cover 804 is aligned with the height at which the port column 126, 128, 508, 608 is configured to receive the cover 804, i.e. where there is an opening and/or supports for the cover 804. This adjustment may be performed using one or more extendable or telescopic features at the bottom of the frame 802 of the port 800, or using one or more supports or chocks which maybe coupled to the bottom of the frame 802 of the port 800.

### Further description of grid cell of the storage grid

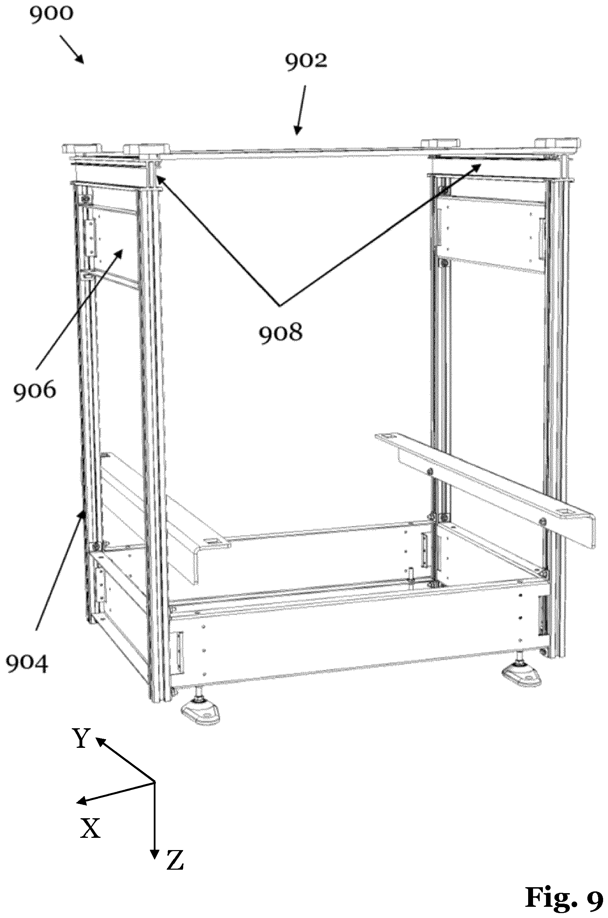

Referring to the embodiment shown in Fig. 9, a grid cell 900 of the storage grid 100 is depicted. This grid cell 900 may be described herein as a put/get cell or as the bottom cell of the port column 902 (corresponding to the port column 126, 128, 508, 608 described above) or as the most proximal cell of the storage grid to the port 900. The grid cell 900 may comprise vertical frame members 904 (corresponding to the vertical frame members 104, 510, 610 described above). The grid cell 900 may comprise one or more supports 906, which may couple the vertical frame members 904 and provide support/stability thereto.

The grid cell 900 may comprise two cover receiving portions 908. Each of the cover receiving portions 908 may comprise a gap or cavity sized and positioned such that the cover can be received therein, i.e. such that the lateral (in the X-direction) sides of the cover can be received therein. Each of the cover receiving portions 908 may be formed by respective supports shaped with the gap or cavity therein, and with a lower surface on which the cover (or rollers/wheels/drums 706 of the cover) can be supported. When the cover is moved from the first position to the second position, it may move into and between the two cover receiving portions 908.

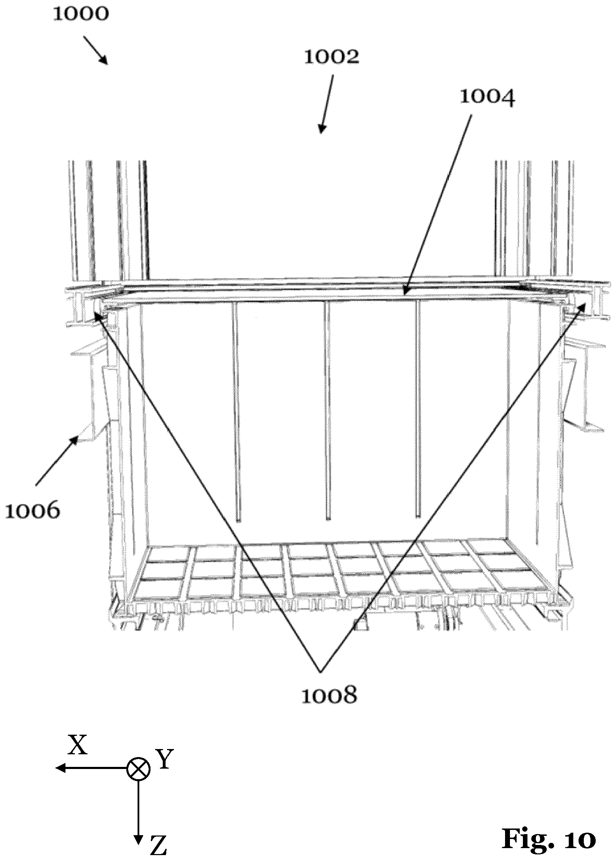

Referring to the embodiment shown in Fig. 10, the grid cell 1000, port column 1002, supports 1006 and cover receiving portions 1008 may correspond to the grid cell 900, port column 902, supports 906 and cover receiving portions 908 respectively as described in relation to Fig. 9. Fig 10 also depicts the cover 1004 positioned between the cover receiving portions 1008, i.e. in the second position.

### Compound ports

According to the present disclosure, the port described herein may be a single-opening port, with one opening, one hatch and one conveyor. Alternatively, the port described herein may be a multiple-opening port, with *n* openings, *n* covers and *n* conveyors, where *n* is an integer equal or greater than two. For example, the multiple opening port may be a double-opening port (for *n* = 2) or a triple-opening port (for *n* = 3). *The n* openings maybe directly adjacent to each other, the *n* hatches maybe directly adjacent to each other and the *n* conveyers may be directly adjacent to each other. These components being adjacent to each other may refer to them being laterally adjacent, i.e. in the X-direction. Each of these openings, covers and/or conveyors may be comprised in the same overall frame (which may be similar to, and may be wider in the X-direction than, the frame 802 described in relation to Figure 8). This may increase the amount of goods that can be retrieved from the storage grid relative to the number of structural components needed to achieve this, and therefore provide retrieval of a given number of goods with a lower overall footprint and thereby provide more efficient use of available space. The multiple-opening port may be coupled to *n* port columns, with each of the *n* port columns being used to transport containers to/from a respective one of the *n* conveyors and *n* openings.

According to the present disclosure, in the second location the cover is within the storage grid, i.e. the cover moves into the storage grid to uncover the opening. This avoids moving the cover laterally, which could prevent multiple-opening ports from being implemented since a cover moved laterally to uncover a first opening could cover a second, adjacent opening. Moreover, movement of the cover in a direction further away from the storage grid could obstruct an operator and still prevent them from retrieving goods from within the container.

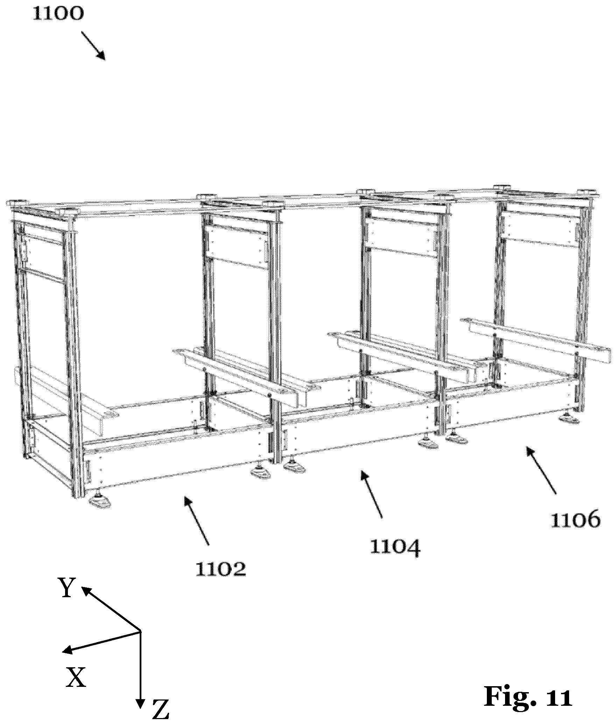

Referring to the embodiment shown in Fig. 11, a grid cell structure 1100 configured for coupling to the multi-opening port (where *n* = 3) is depicted. The grid cell structure comprises a first grid cell 1102 coupled to a second grid cell 1104 and a third grid cell 1106 coupled to the second grid cell 1104. Each of the first, second and third grid cells 1106 generally corresponds to the grid cell 900 described in relation to Figure 9. These first, second and third grid cells 1102, 1104, 1106 may be laterally adjacent to each other, i.e. in the X-direction.

### Method for operating a port coupled to a storage grid

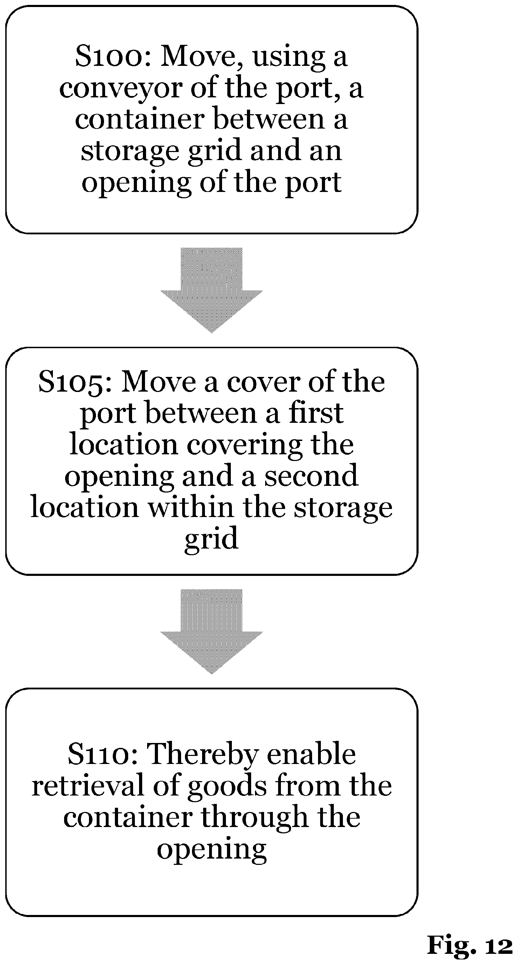

Referring to the embodiment shown in Fig. 12, a method for operating a port coupled to a storage grid is provided. The method may be performed using the features and components described herein, for example those described in relation to Figs. 5-11.

In a step S100, the method comprises moving, using a conveyor of the port, a container between a storage grid and an opening of the port. The container may be lowered to the conveyor down a port column as described herein by a robot. The conveyor may translate the container to an exterior of the storage grid, which may be a location within the port. This may position the container directly below the opening of the port.

In a step S105, the method comprises moving a cover of the port between a first location covering the opening and a second location within the storage grid. This may leave the opening uncovered/unobstructed such that goods in the container can pass through it. In the first location, the cover may prevent access to the container. In the second location, the cover may prevent access to the interior of the storage grid.

In a step S110, the method comprises thereby enabling retrieval of goods from the container through the opening. In other words, the step S110 may be described as being enabled by steps S100 and S105. An operator may retrieve goods from the container through the opening subsequent to step S105.

The method may comprise moving the cover back from the second location to the first location, subsequent to retrieval of the goods from the container through the opening. The method may comprise moving, using the conveyor, the container from the opening of the port back to the storage grid.

The movement of the conveyor and/or the movement of the cover may be controlled or implemented by a controller communicatively coupled thereto. In other words, the controller may generate/send a first control signal to a first drive mechanism coupling the controller to the conveyor, which may cause the conveyor to move. The controller may generate/send a second control signal to a second drive mechanism coupling the controller to the cover, which may cause the cover to move. As described herein, one or both of these drive mechanisms may comprise independent motors, belts and wheels/drums. The controller may be configured to generate/send the control signal to move the cover in response to determining that the conveyor is not moving. The controller may determine that the conveyor is not moving based on one or more sensors configured to monitor movement of the conveyor and communicatively coupled to the controller, based on feedback from a local controller of the conveyor and/or based on a time and content of a most recent control signal sent by the controller to the conveyor.

The controller may be implemented as a single controller or as a conveyor controller communicatively coupled to a cover controller. The generating and sending of the control signals may be implemented based on computer-executable instructions stored in a computer-readable medium, which may be comprised in the controller.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

The disclosure comprises the following items:
1. A method for operating a port coupled to a storage grid, the method comprising:
   moving, using a conveyor of the port, a container between a storage grid and an opening of the port;
   moving a cover of the port between a first location covering the opening and a second location within the storage grid; and
   thereby enabling retrieval of goods from the container through the opening.
2. A method according to item 1, wherein the cover is arranged as a horizontal plane and wherein moving the cover comprises translating the cover horizontally between the first location and the second location.
3. A method according to item 1 or item 2, wherein in the second location the cover covers a cell of the storage grid which is most proximal to the opening.
4. A method according to any preceding item, wherein the movement of the cover between the first location and the second location is implemented by a drive mechanism.
5. A method according to item 4, wherein the drive mechanism comprises a motor and one or more belts, the one or more belts coupling the motor to the cover.
6. A method according to any preceding item, wherein the port comprises one or more supports and the cover comprises one or more rollers disposed on the one or more supports.
7. A method according to any preceding item, comprising a locking mechanism that prevents movement of the cover while the conveyor is moving.
8. A method according to any preceding item, implemented by a controller of the port which controls movement of the conveyor and movement of the cover.
9. A method according to any preceding item, wherein the cover in the first location prevents access by an operator to the container.
10. A method according to any preceding item, wherein the cover in the second location prevents access by an operator to the storage grid.
11. A method according to any preceding item, the port comprising:
   one or more additional openings adjacent to the opening and respectively configured to enable retrieval of goods therethrough from one or more additional containers;
   one or more additional conveyor belts adjacent to the conveyor belt and respectively configured to move the one or more additional containers between the storage grid and the one or more additional openings; and
   one or more additional covers adjacent to the cover and configured to respectively move between one or more additional first locations covering the one or more additional openings and one or more additional second locations within the storage grid.
12. A method according to any preceding item, wherein the storage grid comprises a port column providing a vertical channel for lowering the container to the port and/or lifting the container from the port.
13. A computer readable medium storing instructions for implementing the method of any preceding item.

## Claims

1. A port configured for coupling to a storage grid, the port comprising:
an opening configured to enable retrieval of goods therethrough from a container;
a conveyor configured to move the container between the storage grid and the opening; and
a cover configured to move between a first location covering the opening and a second location within the storage grid.

2. A port according to claim 1, wherein the cover is arranged as a horizontal plane configured to translate horizontally between the first location and the second location.

3. A port according to claim 1 or claim 2, wherein in the second location the cover is configured to cover a cell of the storage grid which is most proximal to the opening.

4. A port according to any preceding claim, comprising a drive mechanism configured to move the cover between the first location and the second location.

5. A port according to claim 4, wherein the drive mechanism comprises a motor and one or more belts, the one or more belts coupling the motor to the cover.

6. A port according to any preceding claim, wherein the port comprises one or more supports and the cover comprises one or more rollers disposed on the one or more supports.

7. A port according to any preceding claim, comprising a locking mechanism configured to prevent movement of the cover while the conveyor is moving.

8. A port according to any preceding claim, comprising a controller configured to control movement of the conveyor and/or to control movement of the cover.

9. A port according to any preceding claim, wherein the cover in the first location is configured to prevent access by an operator to the container.

10. A port according to any preceding claim, wherein the cover in the second location is configured to prevent access by an operator to the storage grid.

11. A port according to any preceding claim, comprising:
one or more additional openings adjacent to the opening and respectively configured to enable retrieval of goods therethrough from one or more additional containers;
one or more additional conveyor belts adjacent to the conveyor belt and respectively configured to move the one or more additional containers between the storage grid and the one or more additional openings; and
one or more additional covers adjacent to the cover and configured to respectively move between one or more additional first locations covering the one or more additional openings and one or more additional second locations within the storage grid.

12. An automated container storage and retrieval system comprising:
a storage grid; and
the port of any preceding claim coupled to the storage grid.

13. An automated container storage and retrieval system according to claim 12, wherein the storage grid comprises a port column providing a vertical channel for lowering the container to the port and/or lifting the container from the port.

14. A method for operating a port coupled to a storage grid, the method comprising:
moving, using a conveyor of the port, a container between a storage grid and an opening of the port;
moving a cover of the port between a first location covering the opening and a second location within the storage grid; and
thereby enabling retrieval of goods from the container through the opening.

15. A computer readable medium storing instructions for implementing the method of claim 14.
